Europäisches Patentamt

European Patent Office

Office européen des brevets

(19)

(11) EP 1 555 710 A1

(12) EUROPEAN PATENT APPLICATION

(43) Date of publication:
20.07.2005 Bulletin 2005/29

(51) Int Cl.$^7$: H01M 10/24

(21) Application number: 05250057.6

(22) Date of filing: 07.01.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 13.01.2004 US 756015

(71) Applicant: Stauffer, John E.
Greenwich Connecticut 06830 (US)

(72) Inventor: Stauffer, John E.
Greenwich Connecticut 06830 (US)

(74) Representative: Newell, Campbell et al
Marks & Clerk Scotland
19 Royal Exchange Square
Glasgow G1 3AE (GB)

(54) Lead zinc battery

(57) A rechargeable battery is provided such that the positive electrode (1) comprises lead dioxide, the negative (2) electrode zinc, and the electrolyte (4) is alkaline. Upon discharge, the lead dioxide is reduced to lead oxide, the zinc is oxidized to zinc oxide, and the electrolyte remains unchanged. The reactions are reversed when the battery is charged.

FIG. 1

## Description

Field of the Invention

The present invention relates to a novel type of storage battery which is distinguished by its unique electrochemistry. The positive electrode comprises lead dioxide and the negative electrode zinc. The electrolyte consists of an alkaline aqueous solution of an alkali metal hydroxide or tetramethyl ammonium hydroxide to which various buffers, including carbonates, borates, silicates, and phosphates, may be added. Upon discharge the lead dioxide is reduced to lead oxide and the zinc is oxidized to zinc oxide.

Background of the Invention

The most common storage battery, found in almost every vehicle, is the lead-acid battery. This battery comprises a lead dioxide positive electrode, a lead metal negative electrode, and sulfuric acid for the electrolyte. Its chief advantage is low cost. Nevertheless, it has a limited energy density and the electrolyte is extremely corrosive. Furthermore, sufficient acid is required to react with the electrodes during discharge. Maintenance-free types avoid the loss of evolved gases, as disclosed in U.S. Patent No. 3,862,861, but their cycle-life is still restricted.

The search for alternatives to the lead-acid battery has been ongoing. As far back as 1934, Drumm disclosed the nickel oxide-zinc battery and the silver oxide-zinc battery (U.S. Patent No. 1,955,115). Both of these batteries employ zinc as the negative electrode and caustic potash as the electrolyte. Nickel oxide or silver oxide serves as the positive electrode. These batteries have improved energy densities and for many uses are a good compromise.

The ideal storage battery would combine the best features of existing batteries with none of the drawbacks. The need for such a battery is apparent for backup systems and in mobile applications. Therefore, it is an object of the present invention to provide an improved storage battery, one that is both economical and highly efficient These and other objects, features, and advantages of the invention will be recognized from the following description and accompanying figure.

Summary of the Disclosure

A rechargeable battery has been developed in which the positive electrode comprises lead dioxide and the negative electrode zinc. Upon discharge, the lead dioxide is reduced to lead oxide and the zinc is oxidized to zinc oxide. These reactions are reversed when the battery is charged.

The electrolyte of the cell is alkaline. Aqueous solutions of bases provide the alkalinity. These bases include ammonia and the hydroxides of the alkali metals, namely, lithium, sodium, potassium and cesium. In addition, tetramethyl ammonium hydroxide may be employed.

Certain additives have been found to be effective buffers in the electrolyte. These additives include carbonates, borates, silicates and phosphates. They may be introduced by the corresponding acids or their respective salts.

The electrodes of a practical embodiment of the invention may be configured as sheets, fibres, or particles thereby to maximize electrode surface area. Interspersed particles of a carbonaceous material may be used to improve the electrical conductivity. A gelling agent may be added to immobilize the electrolyte.

As required, a separator may be employed between the positive and negative electrodes to prevent a short circuit.

Written Description

The chemistry of the lead-zinc battery is important in order to gain an understanding of its operation. A positive electrode comprises lead dioxide which is reduced to lead oxide during discharge. The negative electrode comprises zinc which is oxidized to zinc oxide when the cell is discharged. The electrolyte is alkaline such that the solution contains an excess of hydroxyl ions.

The electrode reactions during discharge can be represented by the following equations.

Positive electrode:

(1)      $PbO_2 + H_2O + 2e^- \rightarrow PbO + 2\ OH^-$

Negative electrode:

(2)      $Zn + 2\ OH^- \rightarrow ZnO + H_2O + 2\ e^-$

In the above reaction, zinc hydroxide may be an intermediate in the formation of zinc oxide. When these equations are combined, the reaction for the cell is:

(3)      $PbO_2 + Zn \rightarrow PbO + ZnO$

In the overall reaction, there is no change in the average composition of the electrolyte during discharge although there may be concentration gradients.

During recharging of the cell, the reactions are reversed. Thus, lead oxide is oxidized to lead dioxide and zinc oxide is reduced to zinc metal. The emf necessary for charging is supplied by an external power source. The discharge-recharge cycle can be repeated endlessly, thus fulfilling the function of a storage battery.

A particularly difficult challenge in designing new batteries is identifying electrode materials that will undergo electrochemical reactions and still withstand corrosion by the electrolyte. Although theory is helpful in this respect, empirical data are required to prove the effectiveness of materials both for the electrodes and the electrolyte. One measure of the relative performance of a cell is its open-circuit voltage.

The use of lead in an alkaline cell may seem questionable because lead in the +2 oxidation state commonly forms plumbous salts containing the positive divalent ion $Pb^{++}$. However, by the action of hydroxides on plumbous compounds it is possible to form the negative ion $HPbO_2^-$ which is soluble in aqueous solutions. Accordingly $Pb(OH)_2$ is regarded as an amphoteric hydroxide. In a similar manner, concentrated solutions of alkali hydroxides act upon the dioxde $PbO_2$ to form plumbate ions, $PbO_4^{-4}$ and $PbO_3^{-2}$, which are likewise soluble.

In view of these considerations, one goal of the research on new cells was to control the concentration hydroxides in the electrolyte. This result was made possible by employing solutions of sodium carbonate which react as follows:

$$(4) \qquad Na_2CO_3 + H_2O \leftrightarrow NaOH + NaHCO_3$$

From this equation it is seen that such solutions are strongly alkaline. The carbonic acid set free on hydrolysis does not escape when the base is strong but forms the bicarbonate. However, hydrolysis can be reduced by increasing the concentration of the sodium carbonate, thus permitting a degree of control over the formation of hydroxide.

In place of carbonates, borates can be employed to similar advantage. Boric acid is a weak acid, much more mild than carbonic acid. Thus, its salts tend to hydrolyze in solution. The following equation shows the reaction of potassium meta borate in solution to form potassium hydroxide and potassium tetra borate.

$$(5) \qquad 2K_2B_2O_4 + H_2O \leftrightarrow 2\,KOH + K_2\,B_4\,0_7$$

Again the hydroxyl concentration can be controlled by adjusting the concentration of the potassium borate.

Carbonates and borates are effective not only in controlling the alkalinity of the electrolyte, but they also form insoluble salts with lead and zinc. In this manner the corrosion of such electrodes can be minimized. Not only are carbonates and borates helpful in this regard but other salts are likewise effective. Both silicates and phosphates form insoluble salts with lead and zinc.

Alkalinity can be provided by compounds of the alkali metals including lithium, sodium, potassium, and cesium. Lithium has certain limitations inasmuch as its carbonate and phosphate are almost insoluble in water.

Cesium provides a very strong base but the cost of this material limits its potential applications. While ammonium hydroxide is basic in solution, its volatility restricts its use. Finally, tetramethyl ammonium hydroxide is known to be strongly alkaline, approaching that of sodium hydroxide and potassium hydroxide.

The present invention covers the use of aqueous solutions for the electrolyte. These solutions have the advantage of superior electrical conductivities. Although use of organic solvents including alcohols and glycols is feasible, their performance is inferior.

The configuration of a lead-zinc cell is not restricted. For purposes of testing various combinations of electrodes and electrolytes, a simple cell was assembled from a glass jar and strips of metals separated, as need be, by a polypropylene sheet. A workable battery, however, would necessarily be designed with the maximum surface areas for the electrodes and minimum volume of electrolyte. Such geometric designs as parallel plates, either flat or spirally wound, are appropriate. Alternatively, particles of lead and zinc either alone or interspersed with graphite may be employed. In this manner, the capacity of the cell can be increased and its internal resistance minimized.

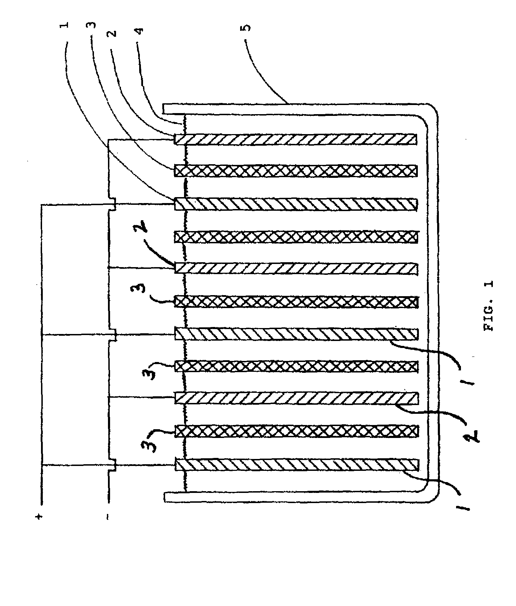

To gain a greater appreciation of the present invention, Fig. 1 illustrates its distinctive features. The cut-away perspective shows a lead-zinc battery comprising a single cell with its electrodes arranged as flat parallel plates. The lead dioxide positive electrodes 1 and the zinc negative electrodes 2 are kept apart by separators 3. These parts are immersed in the alkaline electrolyte 4, which is contained in casing 5. This sectional view also shows the electrical leads attached to the electrodes. An advantage of this design is that by placing the positive and negative electrodes in close proximity to each other the quantity of electrolyte is reduced.

Applications of a secondary battery as provided by the present invention are almost limitless. The largest application is in vehicles including automobiles powered by new hybrid motors. Other uses include portable electronic devices such as cell phones and laptop computers.

Examples

1. The electrolyte in this example contained sodium carbonate. The sodium carbonate solution was prepared by heating 96.8g. of baking soda (sodium bicarbonate) to 260°C (500°F) and dissolving the product in 185 ml. of water. The positive electrode was formed from a 38.1mm (1 1/2 in), wide strip of lead obtained from a plumbing supply business. The negative electrode was a 38.1mm (1 1/2 in.) wide strip of zinc which had been removed from a flashlight battery of the Leclanche type. The cell comprised a glass jar about 69.85mm (2 3/4 in), diameter by 63.5mm (2 1/2 in.) high. After charging the cell for 23 minutes at 2.50 v.. an open circuit voltage of 2.32 v. was observed for the cell, The cell was repeatedly discharged and charged during the course of the run. At the end of the experiment, the electrodes were in perfect condition and the electrolyte was water-white.

2. In this run the electrolyte was a solution of potassium borate. The same electrodes and container were used as in example 1. To prepare the electrolyte 40.0g. of potassium hydroxide and 44.5g. of boric acid were dissolved in 175 ml. of water. After charging the cell for 39 minutes at 2.50 v., the open circuit voltage of the cell was 2.1 v. No corrosion was apparent on either electrode at the end of the run.

3. Tetramethyl ammonium borate was employed for the electrolyte. The same electrodes were used as in the prior runs, but a smaller glass jar 50.8mm (2 in.) diameter by 95.25mm (3 3/4 in), high was substituted. The electrolyte was prepared by dissolving 50.0 g. of tetramethyl ammonium hydroxide pentahydrate and 19.9g. of boric acid in 100 ml. water. An open-circuit voltage of 2.18 v. was obtained after charging the cell at 2.50 v. for 32 minutes. Both electrodes were in excellent condition at the end of the run.

4. In this case the electrolyte comprised sodium hydroxide, sodium carbonate, sodium silicate and sodium phosphate. The electrodes and cell were identical to the ones in the previous run. The electrolyte was prepared by adding 50.1 g. of a household dishwasher detergent to 160 ml. Water. The detergent contained sodium carbonate, sodium silicate, enzymes, and 7.4% phosphorus in the form of phosphates. Activated carbon was added to the solution before filtering it through four coffee filter papers. 125 ml. of filtrate was obtained. Next 5.0g. of sodium hydroxide was added to the filtrate to produce the electrolyte. After extensive charging at 2.5 v., an open-circuit voltage of 2.1 v. was realized. The cell capacity was equal to or better than the results for any of the other runs. The electrodes were in perfect condition at the end of the experiment.

**Claims**

1. A storage battery comprising:

    (a) a positive electrode (1) of lead dioxide;

    (b) a negative electrode (2) of zinc; and

    (c) an alkaline electrolyte (4).

2. A storage battery as claimed in claim 1 in which the alkaline electrolyte (4) is an aqueous solution of a hydroxide of an alkali metal selected from the group lithium, sodium, potassium, and cesium.

3. A storage battery as claimed in claim 1 in which the alkaline electrolyte (4) is an aqueous solution of tetramethyl ammonium hydroxide.

4. A storage battery as claimed in any one of claims 1 to 3 in which the alkaline electrolyte contains a buffering agent selected from the group carbonates, borates, silicates, and phosphates.

FIG. 1

**European Patent Office**

## EUROPEAN SEARCH REPORT

Application Number

EP 05 25 0057

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 200407<br>Derwent Publications Ltd., London, GB;<br>Class L03, AN 2004-063203<br>XP002325403<br>& CN 1 450 679 A (CHEN S)<br>22 October 2003 (2003-10-22)<br>* abstract *<br>----- | 1,2 | H01M10/24 |
| X | DATABASE WPI<br>Section Ch, Week 197740<br>Derwent Publications Ltd., London, GB;<br>Class L03, AN 1977-71980Y<br>XP002325404<br>-& NL 7 602 840 A (LINDSTROEM AB OLLE)<br>20 September 1977 (1977-09-20)<br>* abstract *<br>----- | 1,2 | |
| X | US 3 447 971 A (FRANK E. AMMERMAN)<br>3 June 1969 (1969-06-03)<br>* the whole document *<br>----- | 1,2 | |
| A | DATABASE INSPEC [Online]<br>THE INSTITUTION OF ELECTRICAL ENGINEERS,<br>STEVENAGE, GB;<br>RAO M L B: "Investigations of an alkaline<br>electrolyte for Zn-PbO2 cells"<br>XP002325538<br>Database accession no. 553457<br>* abstract *<br>-& Journal of the Electrochemical<br>Society,<br>vol. 120, no. 7, 1973, pages 855-857,<br>XP009046653<br>ISSN: 0013-4651<br>----- | 1-4 | TECHNICAL FIELDS SEARCHED (Int.Cl.7)<br><br>H01M |

The present search report has been drawn up for all claims

| Place of search | Date of completion of the search | Examiner |
|---|---|---|
| Munich | 21 April 2005 | Koessler, J-L |

**ANNEX TO THE EUROPEAN SEARCH REPORT
ON EUROPEAN PATENT APPLICATION NO.**

EP 05 25 0057

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2005

| Patent document cited in search report | | | Publication date | Patent family member(s) | Publication date |
|---|---|---|---|---|---|
| CN 1450679 | A | | 22-10-2003 | NONE | |
| NL 7602840 | A | | 20-09-1977 | NONE | |
| US 3447971 | A | | 03-06-1969 | NONE | |

For more details about this annex : see Official Journal of the European Patent Office, No. 12/82